# EUROPÄISCHE PATENTSCHRIFT

(11) **EP 0 549 922 B1**
(45) Veröffentlichungstag und Bekanntmachung des Hinweises auf die Patenterteilung: **22.05.1996**
(21) Anmeldenummer: 92120882.3
(22) Anmeldetag: 08.12.1992
(51) Int. Cl.: C08F 8/32

(54) **N-Aryl-substituierte Poly(meth)acrylimide**
N-Aryl substituted poly(meth)acrylimide
Poly(méth)acrylimide substituée par un groupement N-aryl

(30) Priorität: 21.12.1991 DE 4142572
(43) Veröffentlichungstag der Anmeldung: 07.07.1993
(73) Patentinhaber: BASF Aktiengesellschaft, D-67063 Ludwigshafen (DE)
(72) Erfinder: Besecke, Siegmund Dr.,p.A. Erich Besecke, W-3250 Hameln (DE); Deckers, Andreas, Dr., W-6700 Ludwigshaven (DE); Lauke, Harald, Dr., W-6800 Mannheim 1 (DE)

(56) Entgegenhaltungen:
- EP-A- 0 331 052
- WO-A-91/09886
- US-A- 3 284 425
- US-A- 4 246 374
- PATENT ABSTRACTS OF JAPAN vol. 10, no. 230 (C-365)(2286) 9. August 1986 & JP-A-61 064 703

## Beschreibung

Die Erfindung betrifft ein Polymerisat, enthaltend im wesentlichen wiederkehrende Einheiten der Formel I 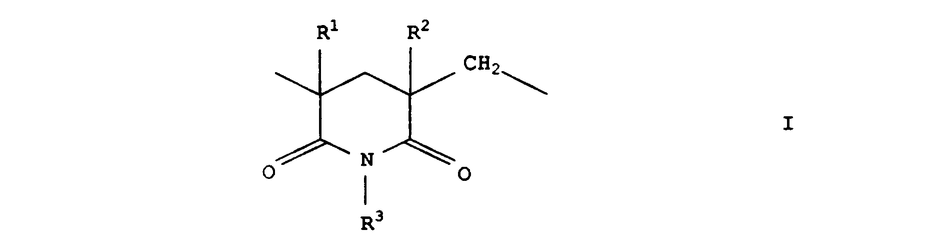 in der
- R¹ und R: für Wasserstoff oder Methyl stehen und
- R³: C₆-C₁₄-Aryl, das bis zu dreifach mit Resten, ausgewählt aus der Gruppe bestehend aus C₁-C₄-Alkyl, C₁-C₄-Alkoxy und Halogen substituiert sein kann, bedeutet,
erhältlich durch Umsetzen eines Polymeren auf Basis von C₁-C₂₀-Alkylestern der Methacrylsäure oder Acrylsäure oder Mischungen solcher Ester mit einem aromatischen Amin der allgemeinen Formel II

R³NH₂ II

in Gegenwart eines Amins mit einem pK_{b}-Wertes ≤ 9.

Ferner betrifft die Erfindung ein Verfahren zur Herstellung dieser Polymerisate, deren Verwendung zur Herstellung von Formkörpern sowie Formkörper aus diesen Polymerisaten.

Polymere auf Basis von C₁-C₂₀-Alkylestern ausgewählt aus der Gruppe bestehend aus Methacrylsäure und Acrylsäure, wovon die am häufigsten verwendeten Vertreter Methylmethacrylat und Methylacrylat sind, zeichnen sich durch eine hervorragende Transparenz und Witterungsstabilität aus. Aus diesen Gründen verwendet man Polymethylmethacrylate ("PMMA") beispielsweise für die Herstellung optisch anspruchsvoller Teile wie Linsen sowie für Lampenabdeckungen.

Für eine ganze Reihe von Anwendungen besitzen solche Acrylat-Formmassen jedoch eine zu geringe Wärmeformbeständigkeit. Eine der möglichen Lösungen besteht in der Erhöhung der Glasübergangstemperatur durch polymeranaloge Umsetzung beispielsweise von PMMA mit primären Aminen (Imidierung) unter Ausbildung cyclischer Imidstrukturen.

In der EP-B 234,726 wird ein Verfahren zur Umsetzung von Methacrylpolymeren mit wasserfreien Aminen in Gegenwart eines Lösungsmittelgemisches (Aromat/Alkohol) bei Temperaturen bis zu 350°C beschrieben, wobei auch aromatische Amine beansprucht werden. Aufgrund der geringen Reaktivität der aromatischen Amine sind jedoch sehr lange Reaktionszeiten und hohe Temperaturen notwendig. Dies führt in der Regel zu stark verfärbten Reaktionsprodukten mit einem hohen Gelbindex. Desweiteren wird unter diesen Bedingungen ein Teil des primären Amins vom Alkohol unter Wasserabspaltung alkyliert. Das freigewordene Reaktionswasser führt anschließend zu einer Verseifung von Carboxylat-Gruppen und somit zu einer unerwünschten Erhöhung der Säurezahl im Produkt.

In der US-A 4,246,374 wird ein Prozeß zur Umsetzung von PMMA mit wasserfreien aromatischen Aminen (lösungsmittelfrei) auf einem Extruder (Schmelzeprozeß) beschrieben. In den Beispielen 37 und 43 dieser Schrift werden Anilin bzw. Tetrachloranilin mit PMMA umgesetzt. Im Vergleich zu den aliphatischen Aminen (Methylamin, Cyclohexylamin) sind auch bei diesem Verfahren die weniger reaktiven aromatischen Amine für die Imidisierungsreaktion schlechter geeignet. Denn die drastische Verlängerung der Verweilzeit in der Reaktionszone führt zu einer unwirtschaftlichen Nutzung der verwendeten Extruder sowie zu einem verfärbten Produkt.

Der Erfindung lag daher die Aufgabe zugrunde, Polymethacrylimide mit aromatischer N-Substitution mit einer verminderten Säurezahl und einem verbesserten Gelbindex zur Verfügung zu stellen.

Demgemäß wurden die eingangs definierten Polymerisate gefunden.

Außerdem wurden ein Verfahren zur Herstellung dieser Polymerisate, deren Verwendung zur Herstellung von Formkörpern sowie Formkörper, erhältlich aus diesen Polymerisaten, gefunden.

Unter den Polymerisaten auf Basis von C₁-C₂₀-Alkylestern der Methacrylsäure und Acrylsäure sind sowohl Homo- als auch Copolymere zu verstehen, wobei die Copolymeren andere ethylenisch ungesättigten Comonomere enthalten können.

Als C₁-C₂₀-Alkylester der Methacrylsäure kommen bevorzugt die C₁-C₄-Alkylester wie Methylmethacrylat ("MMA"), Ethylmethacrylat, Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als C₁-C₂₀-Alkylester der Acrylsäure verwendet man bevorzugt die C₁-C₄-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als ethylenisch ungesättigte Comonomere kann man Acrylsäure, Methacrylsäure, Maleinsäurederivate wie Imide und C₁-C₁₀-Alkylester, Itaconsäurederivate wie Imide und C₁-C₁₀-Alkylester, Acryl- und Methacrylnitril, Styrol, α-Methylstyrol, Ethylen, Propylen und Butadien sowie Mischungen dieser Monomeren einsetzen.

Die Polymerisate können ein- oder mehrstufig hergestellt werden, wobei bei mehrstufiger Polymerisation wenigstens die äußere Stufe Gruppen enthalten muß, die imidiert werden können.

Im allgemeinen sind die Polymerisate zu mehr als 50, bevorzugt zu mehr als 80 Gew.-% aus C₁-C₂₀-Alkylestern der Methacrylsäure und Acrylsäure aufgebaut. Als besonders vorteilhaft haben sich nach bisherigen Beobachtungen Polymerisate aus 80 bis 100 Gew.-% Methylmethacrylat und 0 bis 20 Gew.-% Methylacrylat mit einem Molekulargewicht (Gewichtsmittelwert M_{w}) von 20.000 bis 300.000 g/mol erwiesen.

Als aromatisches primäres Amin, R³NH₂, verwendet man ein C₆-C₁₄-Arylamin, das bis zu dreifach mit C₁-C₄-Alkyl, C₁-C₄-Alkoxy und Halogen wie Fluor, Chlor und Brom substituiert sein kann.

Beispielhaft seien genannt Anilin, 2-, 3-, 4-Methylanilin, 2,3-, 2,4-, 2,5-, 2,6-, 3,4-, 3,5-Dimethylanilin, 2,6-Diethylanilin, 2,4,6-Trimethylanilin, 2-, 3-, 4-Methoxyanilin, 2,4-, 2,5-, 3,4-, 3,5-Dimethoxyanilin, 3,4,5-Trimethoxyanilin, 2-, 3-, 4-Chloranilin, 2,3-, 2,4-, 2,5-, 2,6-, 3,4-, 3,5-Dichloranilin, 2-, 3-, 4-Bromanilin, 2,4-, 2,5-, 2,6-Dibromanilin, 2-, 3-, 4-Fluoranilin, 1-, 2-Aminonaphthalin, l-Amino-2-methyl-naphthalin, 2-Amino-l-methyl-naphthalin, 1-, 2-Aminoanthracen, 9-Aminophenanthren, bevorzugt Anilin, 4-Methoxyanilin, 1- und 2-Aminonaphthalin.

Zur Beschleunigung der Reaktion kann man nach bisherigen Beobachtungen alle Amine mit einem pk_{b}-Wert ≤9, bevorzugt solche mit einem pKb-Wert ≤6, einsetzen. Beispielhaft seien genannt primäre Amine wie C₁-C₂₀-Alkylamine, C₅-C₁₂-Cycloalkylamine, sekundäre Amine wie Di-(C₁-C₁₈-alkyl)amine und Di-(C₅-C₈-cycloalkyl)amine, beispielsweise Diethyl-, Dipropyl-, Dibutyl- und Dicyclohexylamin, und Ammoniak, bevorzugt Ammoniak und primäre Amine wie Cyclohexylamin. Besonders bevorzugt setzt man primäre Amine mit einem Siedepunkt von 100 bis 250°C wie C₇-C₂₀-Alkylamine, z.B. Heptylamin, Octylamin, Decylamin, Dodecylamin, Stearylamin und Eicosylamin, und C₅-C₁₂-Cycloalkylamine wie Cyclopentylamin, Cyclohexylamin, Cycloheptylamin, Cyclooctylamin und Cyclododecylamin, ein.

Die Reaktion führt man in der Regel so durch, daß man eine Mischung bestehend aus Acrylat-Polymer, aromatischem Amin und Katalysator in einem Lösungsmittel unter Sauerstoffausschluß zum Sieden erhitzt. Bevorzugt destilliert man dabei den bei der Reaktion entstehenden Alkohol, in der Regel Methanol, kontinuierlich ab, um Nebenreaktionen wie Ether-Bildung, Amin-Alkylierung und Ester-Verseifung zu unterdrükken.

Gegen Ende der Reaktion kann man gegebenenfalls überschüssiges Amin ebenfalls destillativ entfernen. Nach beendeter Umsetzung isoliert man im allgemeinen das erfindungsgemäße Polymer nach üblichen Methoden, beispielsweise durch Ausfällen, bevorzugt in Methanol, und anschließendes Trocknen. Es ist zum Beispiel ebenfalls möglich, das erfindungsgemäße Polymer zu isolieren, indem man das Reaktionsgemisch durch Behandeln auf einem Entgasungsextruder von den niedermolekularen Begleitstoffen wie Lösungsmittel, Amin und Alkohol befreit.

Man kann die Umsetzung auch ohne Lösungsmittel in der Schmelze durchführen, jedoch ist die Ausführungsform in Lösung bevorzugt.

Das aromatische Amin kann man dabei gleich zu Beginn der Reaktion vorlegen oder beispielsweise kontinuierlich in dem Maße wie es verbraucht wird zugeben.

Das Gewichtsverhältnis von eingesetztem aromatischem Amin zu Acrylat-Polymer wählt man in der Regel im Bereich von 100:1 bis 0,1:1, bevorzugt von 20:1 bis 1:1.

Das Molverhältnis von aromatischem Amin zu Katalysator liegt im allgemeinen im Bereich von 2:1 bis 1000:1, bevorzugt von 5:1 bis 100:1.

Als Lösungsmittel kann man prinzipiell alle aprotischen, polaren Lösungsmittel wie
N,N'-disubstituierte, cyclische oder acyclische Carbonsäureamide wie Dimethylformamid, Diethylformamid, Dimethylacetamid, Diethylacetamid
N-Methyl-2-pyrrolidon, N-Ethyl-2-pyrrolidon
N,N,N',N'-tetrasubstituierte, cyclische oder acyclische Harnstoffe wie Tetramethylharnstoff
N-substituierte, cyclische oder acyclische (Poly)Amine wie Dicyclohexylmethylamin, Dimethylcyclohexylamin, N,N,N',N'-Tetramethylethylendiamin, N,N,N',N'-Tetramethylhexamethylendiamin
hochsiedende Ether wie Ethylenglykoldimethylether, Diethylenglykoldimethylether
Alkylencarbonate wie Ethylencarbonat, Propylencarbonat
sowie andere übliche aprotische und polare Lösungsmittel wie Hexamethylphosphorsäuretriamid, Nitroalkane wie Nitromethan, Dimethylsulfoxid, Diphenylsulfoxid und Sulfolan verwenden, wobei N-Methylpyrrolidon bevorzugt ist.

Das Gewichtsverhältnis von verwendetem Lösungsmittel zu Polymer liegt in der Regel im Bereich von 1:1 bis 100:1, bevorzugt von 1:1 bis 10:1.

Die Reaktionstemperatur wählt man im allgemeinen im Bereich von 50 bis 350°C, bevorzugt im Bereich von 150 bis 250°C.

Als Schutzgasatmosphäre verwendet man in der Regel die üblichen Inertgase wie Stickstoff, Argon, Helium oder Kohlendioxid.

Der Reaktionsdruck ist in der Regel unkritisch. Man arbeitet in Lösung im allgemeinen im Bereich von 80 bis 250 kPa, bevorzugt unter Atmosphärendruck.

Die Wahl des pH-Bereiches ist ebenfalls unkritisch und liegt wegen des eingesetzten Amins in der Regel oberhalb von 7.

Die Reaktionszeit liegt in der Regel im Bereich von 0,01 bis 100 h, bevorzugt 0,05 bis 50 h.

Desweiteren kann man gegebenenfalls die Reaktion durch Zusatz bekannter Aminolysekatalysatoren in Mengen im Bereich von 0,01 bis 10 Gew.-%, bezogen auf das eingesetzte Polymer, weiter beschleunigen.

Beispielhaft seien genannt
tertiäre Amine wie Tricyclohexylamin,
substituierte Guanidine wie 1,1,3,3-Tetramethyl- und 1,3-Diphenylguanidin
tetrasubstituierte Alkylammoniumverbindungen wie Trimethylstearylammoniumchlorid
organische Titanverbindungen wie Tetrapropoxytitan, Tetrabutoxytitan
organische Zinnverbindungen wie Dibutylzinnoxid, Dibutylzinndidodecanat
aromatische Amine und Imide wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl,
Imide wie N,N'-Dicyclohexylcarbodiimid
sowie Antimontrioxid, Zinndioxid, Natriumamid, Natrium- und Kaliumalkoholate wie Natrium- und Kaliummethanolat, Ammoniumchlorid und Ammoniumiodid.

Das N-Aryl-substituierte Poly(meth)acrylimid kann man nach üblichen Methoden verarbeiten, z.B. durch Spritzguß, Extrusion oder Sintern zur Herstellung von Formkörpern.

Die erfindungsgemäßen Poly(meth)acrylimide und Formkörper weisen eine Säurezahl (Gehalt an freien Carboxyl- und Anhydrid-Gruppen) von ≤ 0,5 Äquivalenten pro Kilogramm Polymer auf. Hierdurch werden sehr gute Werte im Fließverhalten, in der chemischen Beständigkeit und in der Spannungsrißbeständigkeit erreicht.

Durch einen Transmissionsgrad von ≥ 85% und einem Gelbindex (nach DIN 5036) von ≤ 15 zeigen die erfindungsgemäßen N-Aryl-substituierten Poly(meth)acrylimide gute optische Qualitätswerte.

Mit den erfindungsgemäßen Polymerisaten lassen sich thermoplastisch verarbeitbare Formmassen mit hoher Wärmeformbeständigkeit herstellen.

### Beispiele

### Beispiel 1

In einem Reaktionsgefäß mit Füllkörperkolonne wurde eine Mischung aus 200 g PMMA (aus 99 Gew.-% MMA und 1 Gew.-% MA mit einem mittleren Molekulargewicht (M_{w}) von 115 000 g/mol), 103 g (1,1 mol) Anilin, 10 g (0,1 mol) Cyclohexylamin und 600 g N-Methylpyrrolidon unter Stickstoff zum Sieden erhitzt. Nach etwa 30 min war das gesamte Polymer gelöst und die Innentemperatur betrug 140°C. Nach insgesamt 90 min Reaktionszeit wurde das entstandene Methanol kontinuierlich aus dem Reaktionsgemisch abdestilliert, wobei im Verlauf der weiteren Reaktion die Innentemperatur auf 200°C anstieg. Das gebildete Polymethacrylimid wurde in Methanol ausgefällt und anschließend getrocknet.

Die Ergebnisse des Versuchs sind Tabelle 1 zu entnehmen.

### Beispiele 2 - 8

Analog zu Beispiel 1 wurden 200 g PMMA (gleiche Zusammensetzung wie in Beispiel 1) mit jeweils 1,2 mol einer Mischung aus aromatischem Amin und Katalysator (s. Tabelle 2) umgesetzt und wie oben angegeben aufgearbeitet.

Die genauen Versuchsmengen und die Ergebnisse der Versuche sind Tabelle 1 zu entnehmen.

### Beispiel 9 (Imidierung in der Schmelze)

Auf einem Zweiwellenextruder (ZSK-40) mit gleichlaufenden, kämmenden Schnecken wurden 10 kg/h PMMA (gleiche Zusammensetzung wie in Beispiel 1) kontinuierlich bei einer Temperatur von 270°C mit 5 kg/h einer Mischung aus 80 mol-% Anilin und 20 mol-% Cyclohexylamin zur Reaktion gebracht. Nach der Reaktionszone wurde die Polymerschmelze auf dem gleichen Extruder entgast und granuliert.

Die Ergebnisse des Versuchs sind Tabelle 1 zu entnehmen.

### Beispiel 10 (Vergleich zu Beispiel 9)

Der Versuch aus Beispiel 9 wurde wiederholt mit dem Unterschied, daß anstelle des Amingemisches reines Anilin verwendet wurde.

Die Ergebnisse des Versuchs sind Tabelle 1 zu entnehmen.

**Tabelle 1:**

| Beispiele 1 - 10, Imidierung in Lösung und in der Schmelze | | | | | |
|---|---|---|---|---|---|
| Beispiel | ArNH₂ | (mol) | RNH₂ | (mol) | N-Gehalt¹⁾(%) |
| 1 | Anilin | (1,1) | Cyclohexylamin | (0,1) | 3,8 |
| 2 | Anilin | (1,0) | Cyclohexylamin | (0,2) | 4,8 |
| 3 | Anilin | (0,7) | Cyclohexylamin | (0,5) | 5,4 |
| 4 (Vergl.) | Anilin | (1,2) | - | (0,0) | 2,3 |
| 5 | 1-Aminonaphthalin | (1,0) | Cyclohexylamin | (0,2) | 3,1 |
| 6 (Vergl.) | 1-Aminonaphthalin | (1,2) | - | (0,0) | 1,3 |
| 7 | 4-Methoxyanilin | (1,0) | Cyclohexylamin | (0,2) | 3,6 |
| 8 (Vergl.) | 4-Methoxyanilin | (1,2) | - | (0,0) | 2,0 |
| 9 | Anilin | (0,8) | Cyclohexylamin | (0,2) | 3,2 |
| 10(Vergl.) | Anilin | (1,0) | - | (0,0) | 1,8 |

| | | | | | |
|---|---|---|---|---|---|
| ¹⁾ N-Gehalt aus Elementaranalyse | | | | | |

### Beispiele 11 - 13

Analog zu Beispiel 1 wurden jeweils 1,5 Mol Anilin, Cyclohexylamin und eine Mischung aus Anilin und Cyclohexylamin (1,2/0,3 mol) mit 200 g PMMA umgesetzt.

Die Ergebnisse der Qualitätsprüfungen sind Tabelle 2 zu entnehmen.

Die Bestimmung der Glasübergangstemperatur Tg der Polymere erfolgte nach der DSC-Methode (ASTM D 3418-82) auf einem DSC-30-Gerät der Fa. Mettler.

Der Gehalt an Carboxyl- und Anhydrid-Gruppen wurde titrimetrisch bestimmt. Hierzu wurden 0,3 g Polymer in 75 ml eines 1:1 Gemisches aus Dichlormethan und Methanol gelöst und die Mischung mit einem Überschuß, bezogen auf die Carboxyl- und Anhydrid-Gruppen, eines abgemessenen Volumens einer 0,1 N Natriumhydroxid-Lösung versetzt. Anschließend wurde Überschüssige Base mit 0,1 N Salzsäure zur Neutralität titriert, wobei der Endpunkt potentiometrisch bestimmt wurde.

Der Gehalt an Säure wurde dann aus der Differenz, in Äquivalenten, der zugefügten Base und der verbrauchten Menge Säure bestimmt, wobei der Säurewert durch Subtraktion des Lösungsmittel-Blindwertes korrigiert wurde (ermittelt durch Ausführung der Bestimmung ohne Polymer).

Die Säurezahl ("SZ") wurde dann als Gehalt an Säure in Äquivalenten pro Kilogramm imidisierbares Polymer berechnet.

Der Yᵢ-Gelbindex wurde gemäß DIN 6 167 an Rundscheiben (0̸ = 80 mm, d = 6 mm) bestimmt.

Der Lichttransmissionsgrad wurde gemäß DIN 5 036 an 1 mm dicken Probekörpern (Rundscheiben 0̸ = 80 mm, d = 6 mm) durchgeführt.

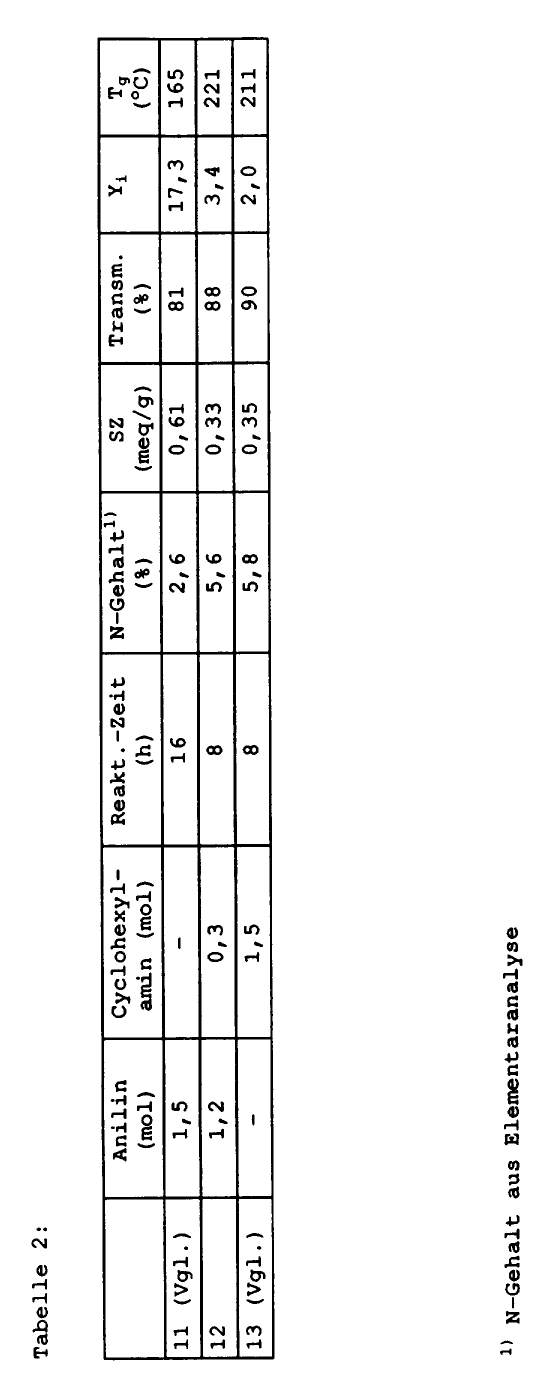

## Patentansprüche

1. Polymerisat, enthaltend im wesentlichen wiederkehrende Einheiten der Formel I 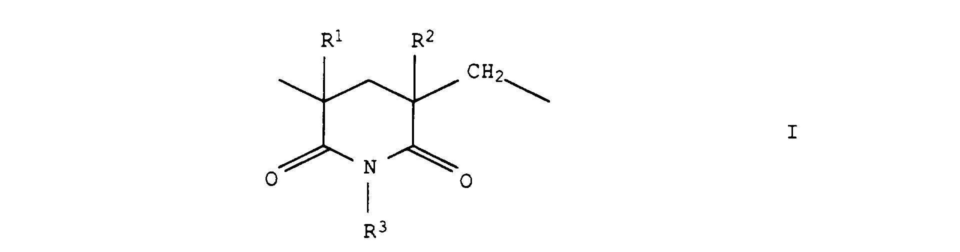 in der
R¹ und R für Wasserstoff oder Methyl stehen und
R³ C₆-C₁₄-Aryl, das bis zu dreifach mit Resten, ausgewählt aus der Gruppe bestehend aus C₁-C₄-Alkyl, C₁-C₄-Alkoxy und Halogen substituiert sein kann, bedeutet,
erhältlich durch Umsetzen von Polymeren auf Basis von C₁-C₂₀-Alkylestern der Methacrylsäure oder Acrylsäure oder Mischungen solcher Ester mit einem aromatischen Amin der allgemeinen Formel II
R³NH₂ II
in Gegenwart eines Amins mit einem pK_{b}-Wert ≤ 9.

2. Verfahren zur Herstellung eines Polymerisates gemäß Anspruch 1 durch Umsetzen eines Polymeren auf Basis von C₁-C₂₀-Alkylestern der Methacrylsäure oder Acrylsäure oder Mischungen solcher Ester mit einem aromatischen Amin der allgemeinen Formel II
R³NH₂ II
dadurch gekennzeichnet, daß man die Umsetzung in Gegenwart eines Amins mit einem pK_{b}-Wertes ≤ 9 durchführt.

3. Verwendung der Polymerisate gemäß Anspruch 1 zur Herstellung von Formkörpern, Fasern und Folien.

4. Formkörper, erhältlich aus Polymerisaten gemäß Anspruch 1.

## Claims

1. An addition polymer containing essentially repeat units of the formula I 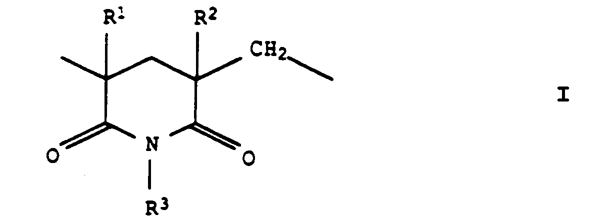 where
R¹ and R are each hydrogen or methyl, and
R³ is C₆-C₁₄-aryl, which may be monosubstituted, disubstituted or trisubstituted by radicals selected from the group consisting of C₁-C₄-alkyl, C₁-C₄-alkoxy and halogen,
obtainable by reacting a polymer based on C₁-C₂₀-alkyl esters of methacrylic acid or of acrylic acid or mixtures of such esters with an aromatic amine of the general formula II
R³NH₂ II
in the presence of an amine having a pK_{b} value ≤ 9.

2. A process for preparing an addition polymer as claimed in claim 1 by reacting a polymer based on C₁-C₂₀-alkyl esters of methacrylic acid or of acrylic acid or mixtures of such esters with an aromatic amine of the general formula II
R³NH₂ II
which comprises carrying out the reaction in the presence of an amine having a pK_{b} value ≤ 9.

3. The use of the addition polymers of claim 1 for preparing shaped articles, fibers and films/sheets.

4. Shaped articles obtainable from addition polymers as claimed in claim 1.

## Revendications

1. Polymère contenant essentiellement des motifs répétitifs de formule I 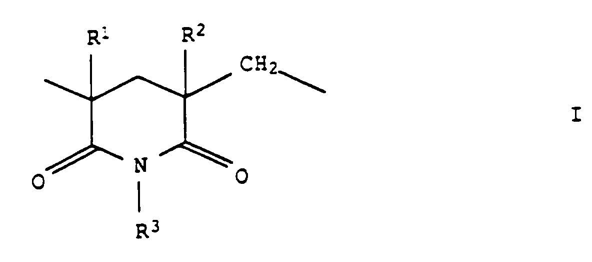 dans laquelle
R¹ et R sont mis pour des atomes d'hydrogène ou des restes méthyle et
R³ représente un reste aryle en C₆-C₁₄ qui peut être substitué jusqu'à trois fois par des restes choisis dans le groupe constitué par les groupements alkyle en C₁-C₄, alcoxy en C₁-C₄ et des atomes d'halogène,
obtenu par réaction de polymères à base d'esters alkyliquee en C₁-C₂₀ de l'acide méthacrylique ou de l'acide acrylique, ou de mélanges de tels esters, avec une amine aromatique de formule générale II
R³NH₂ II
en présence d'une amine ayant une valeur pK_{b} ≤ 9.

2. Procédé de préparation d'un polymère selon la revendication 1, par réaction d'un polymère à base d'esters alkyliques en C₁-C₂₀ de l'acide méthacrylique ou de l'acide acrylique, ou de mélanges de tels esters, avec une amine aromatique de formule générale II
R³NH₂ II
caractérisé en ce que l'on conduit la réaction en présence d'une amine ayant une valeur pK_{b} ≤ 9.

3. Utilisation des polymères selon la revendication 1 pour la fabrication de corps moulés, de fibres et de feuilles.

4. Corps moulés, obtenus à partir de polymères selon la revendication 1.
